# EUROPÄISCHE PATENTANMELDUNG

(11) **EP 3 875 315 A1**
(43) Veröffentlichungstag der Anmeldung: **08.09.2021**
(21) Anmeldenummer: 20161472.4
(22) Anmeldetag: 06.03.2020
(51) Int. Cl.: B60Q 1/068, B60Q 1/076, F16D 11/00

(54) **EINSTELLVORRICHTUNG ZUR EINSTELLUNG EINER OPTISCH RELEVANTEN BAUEINHEIT EINES KRAFTFAHRZEUGSCHEINWERFERS**

(71) Anmelder: ZKW Group GmbH, 3250 Wieselburg (AT)
(72) Erfinder: Hobel, Gregor, 3650 Pöggstall (AT); Windgruber, Patrick, 3231 St. Margarethen an der Sierning (AT)
(74) Vertreter: Patentanwaltskanzlei Matschnig & Forsthuber OG

(57) **Zusammenfassung**

Einstellvorrichtung (100) zur Einstellung einer optisch relevanten Baueinheit eines Kraftfahrzeugscheinwerfers, welche Einstellvorrichtung Folgendes umfasst:
- eine Antriebsvorrichtung (150), welche an einem Halterungskörper (500) angeordnet ist, und ein um eine Verschubachse (X) drehbar gelagertes Übertragungselement (200) umfasst,
- ein Stellelement (300), aufweisend einen Verbindungsabschnitt (340) und einem Gewindeabschnitt (350), wobei der Verbindungsabschnitt (340) des Stellelements (300) mit dem Übertragungselement (200) mittels einer Verbindung in mechanischem Eingriff steht, wobei das Stellelement (300) dazu eingerichtet ist, an der optisch relevanten Baueinheit mittels einem Kopplungselement (360) anzugreifen, und
- ein in dem Halterungskörper (500) angeordnetes Führungsteil (400) mit einem den Gewindeabschnitt (350) korrespondierenden Gegengewinde (410), wobei das Stellelement (300) mittels des auf den Gewindeabschnitt (350) anbringbaren Führungsteils (400), welches in Kombination mit dem Gewindeabschnitt (350) dazu eingerichtet ist, eine Drehbewegung des Übertragungselements (200) in eine Schiebebewegung entlang der Verschubachse (X) zu wandeln, in dem Führungsteil (400) dreh- und verschiebbar gelagert ist, wobei das Kopplungselement (360) des Stellelements (300) zwischen dem Gewindeabschnitt (350) und dem Verbindungsabschnitt (340) angeordnet ist.

## Beschreibung

Die Erfindung betrifft eine Einstellvorrichtung zur Einstellung einer optisch relevanten Baueinheit eines Kraftfahrzeugscheinwerfers, welche Einstellvorrichtung Folgendes umfasst:
- eine Antriebsvorrichtung, welche an einem Halterungskörper angeordnet ist, und ein um eine Verschubachse drehbar gelagertes Übertragungselement umfasst,
- ein Stellelement, aufweisend einen Verbindungsabschnitt und einem Gewindeabschnitt, wobei der Verbindungsabschnitt des Stellelements mit dem Übertragungselement mittels einer Verbindung in mechanischem Eingriff steht, wobei das Stellelement dazu eingerichtet ist, an der optisch relevanten Baueinheit mittels einem Kopplungselement anzugreifen, und
- ein in dem Halterungskörper angeordnetes Führungsteil mit einem den Gewindeabschnittkorrespondierenden Gegengewinde, wobei das Stellelement mittels des auf den Gewindeabschnitt anbringbaren Führungsteils, welches in Kombination mit dem Gewindeabschnitt dazu eingerichtet ist, eine Drehbewegung des Übertragungselements in eine Schiebebewegung entlang der Verschubachse zu wandeln, in dem Führungsteil dreh- und verschiebbar gelagert ist.

Zur gesetzeskonformen Einstellung des mit einem Scheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können.

Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebsvorrichtung vorgesehen, wobei die Antriebsvorrichtung üblicherweise manuell betätigbar ist, beispielsweise umfasst die Antriebsvorrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Es ist eine Aufgabe der Erfindung eine verbesserte Einstellvorrichtung zur Einstellung einer optisch relevanten Baueinheit eines Kraftfahrzeugscheinwerfers bereitzustellen.

Diese Aufgabe wird dadurch gelöst, dass das Kopplungselement des Stellelements zwischen dem Gewindeabschnitt und dem Verbindungsabschnitt angeordnet ist.

Das Kopplungselement ist gewissermaßen das Zentrum der Einstellvorrichtung, sodass der vorhandene Bauraum in einem Kraftfahrzeugscheinwerfer besser ausgenutzt bzw. eingehalten werden kann. Insgesamt ist dadurch eine Bauraumverringerung des Kraftfahrzeugscheinwerfers bzw. des Kraftfahrzeugscheinwerfergehäuses erzielbar.

Wie bereits erwähnt ist die das Übertragungselement mit dem Stellelement verbindende Verbindung dazu eingerichtet, eine Drehbewegung des Übertragungselements in eine Schiebebewegung des Stellelements entlang der Verschubachse relativ zu dem Übertragungselement zu wandeln.

Das Stellelement greift dergestalt an einer optisch relevanten Baueinheit an, dass eine Bewegung des Stellelements in eine geänderte Ausrichtung der optisch relevanten Baueinheit gewandelt werden kann. Bei der optisch relevanten Baueinheit kann es sich beispielsweise um Blenden(anordnungen), Strahlenblenden, Lichtquellen, Reflektoren, Linsen, ganze Lichtmodule bzw. Baugruppen, etc. handeln. Ebenso ist es möglich, dass eine optisch relevante Baueinheit in einer Verstellmechanik, beispielsweise in einem schwenkbar gelagerten Tragerahmen, aufgenommen ist. Unter dem Ausdruck "dass das Stellelement dazu eingerichtet ist, an der optisch relevanten Baueinheit anzugreifen" wird daher auch eine Anordnung verstanden, in der das Stellelement indirekt, beispielsweise über eine Verstellmechanik) an der optisch relevanten Baueinheit angreift.

Es kann vorgesehen sein, dass das Stellelement zumindest einen radial zur Verschubachse vorragenden Vorsprung und der Halterungskörper einen ersten und einen zweiten dazu korrespondierenden Anschlag aufweist, wobei der Vorsprung sowie der erste und zweite Anschlag dazu eingerichtet sind, den Hub des Stellelements entlang der Verschubachse zu begrenzen.

Der Maximal- sowie der Minimalhub des Stellelements entlang der Verschubachse in Bezug auf das Übertragungselement wird durch den zumindest einen am Stellelement angeordneten Vorsprung und den zwei dazu korrespondierenden, an dem Führungselement angeordneten Anschlägen begrenzt. Ferner zentriert das Führungsteil das in dem Führungsteil angeordnete Stellelement, sodass das Stellelement nur in Richtung der Verschubachse vor und zurück bewegbar ist.

Das Führungsteil kann als von den restlichen Bauteilen der Einstellvorrichtung getrennt ausgebildet sein und ist in Bezug auf die Antriebsvorrichtung fixiert.

Für gewünschte Änderungen der auszuführenden Hublänge des Stellelements braucht dementsprechend lediglich das Führungsteil ausgetauscht werden bei sonst gleichbleibenden Komponenten der Einstellvorrichtung.

Weiters wird die Feinjustierung der Bewegung des Stellelements entlang der Verschubachse durch die Gewindesteigung des Gewindeabschnitts des Stellelements und des dazu korrespondierenden Gegengewindes der Führungsteils, d.h. dass für jede bestimmte Gewindesteigung eines Stellelements ein eigenes Führungsteil vorgesehen sein kann.

Es kann vorgesehen sein, dass das Stellelement zumindest teilweise in einer im Wesentlichen kreisförmigen, konzentrisch zur Verschubachse angeordneten Öffnung desÜbertragungselements aufgenommen ist, wobei das Übertragungselement als Überdrehschutz elastische Zungen aufweist, die am Umfang der im Wesentlichen kreisförmigen Öffnung angeordnet sind und sich entlang der Verschubachse erstrecken, wobei die elastischen Zungen Vorsprünge aufweisen, die dazu eingerichtet sind, in auf dem Stellelement angeordnete, korrespondierende Vertiefungen einzugreifen.

Es kann vorgesehen sein, dass die Vorsprünge in Form von achsenparallelen Zapfen und die dazu korrespondierenden Vertiefungen als achsenparallele Rillen ausgeführt sind.

Es kann vorgesehen sein, dass das Führungsteil lösbar in dem Halterungskörper angeordnet ist.

Dies bringt den Vorteil, dass die Einstellvorrichtung variabel bleibt im Hinblick auf die oben beschriebene Feinjustierung, d.h. unterschiedliche Stellelemente und dazu korrespondierenden Führungsteilen mit dem Führungselements kombinierbar sind.

Mit anderen Worten ist die Übersetzung der Drehbewegung der Antriebsvorrichtung über die Gewindesteigung des Stellelements und dem dazu korrespondierenden Führungsteil bestimmt, und diese Übersetzung kann, wie oben beschrieben, durch ein einfaches Austauschen des Stellelements und des Führungsteils variabel verändert werden ohne dass andere Komponenten der Einstellvorrichtung verändert werden müssen.

Es kann vorgesehen sein, dass die Antriebsvorrichtung als mechanischer Motor, vorzugsweise mit einem Winkelgetriebe, ausgebildet ist.

Es kann auch vorgesehen sein, dass der Halterungskörper mit dem Scheinwerfergehäuse gemeinsam als ein Stück mittels einem Spritzgussverfahren hergestellt ist.

Es kann vorgesehen sein, dass die Antriebsvorrichtung als Elektromotor ausgebildet ist.

Es kann vorgesehen sein, dass das Kopplungselement durch einen konzentrisch zur Verschubachse angeordneten Kugelkopf gebildet ist.

Die Aufgabe wird ebenso gelöst durch einen Kraftfahrzeugscheinwerfer mit einem Gehäuse und zumindest einer optisch relevanten Baueinheit sowie mit zumindest einer erfindungsgemäßen Einstellvorrichtung.

Dabei kann vorgesehen sein, dass das Führungsteil in Bezug auf das Gehäuse des Kraftfahrzeugscheinwerfers feststehend angeordnet ist.

Es kann vorgesehen sein, dass der Halterungskörper mit dem Gehäuse des Kraftfahrzeugscheinwerfers fest verbunden ist.
Nachfolgend wird die Erfindung anhand von beispielhaften Zeichnungen näher erläutert. Hierbei zeigt
Fig. 1 eine Explosionsansicht einer beispielhaften Einstellvorrichtung mit einer Antriebsvorrichtung, welche mittels einem Übertragungselement ein Stellelement antreibt,
Fig. 2 eine perspektivische Ansicht der beispielhaften Einstellvorrichtung aus Fig. 1 in einem zusammengebauten Zustand,
Fig. 3 eine perspektivische Detailansicht des Übertragungselements des in Fig. 1 gezeigten Beispiels, und
Fig. 4 eine perspektivische Detailansicht des mit dem Übertragungselement in Eingriff stehendem Stellelements.

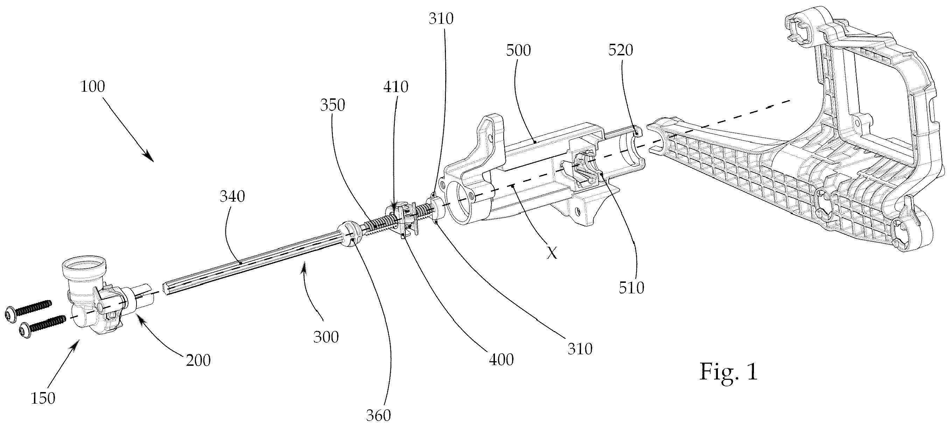

**Fig. 1** zeigt eine beispielhafte Einstellvorrichtung **100** zur Einstellung einer optisch relevanten Baueinheit eines Kraftfahrzeugscheinwerfers, welche Einstellvorrichtung eine Antriebsvorrichtung **150**, welche an einem Halterungskörper **500** angeordnet ist, und ein um eine Verschubachse **X** drehbar gelagertes Übertragungselement **200** aufweist, umfasst. Die Antriebsvorrichtung **150** kann als mechanischer Motor, vorzugsweise mit einem Winkelgetriebe, oder als Elektromotor ausgebildet sein.

Die Einstellvorrichtung **100** umfasst weiters ein Stellelement **300**, aufweisend einen Verbindungsabschnitt **340** und einem Gewindeabschnitt **350**, wobei der Verbindungsabschnitt **340** des Stellelements **300** mit dem Übertragungselement **200** mittels einer Verbindung in mechanischem Eingriff steht, wobei das Stellelement **300** dazu eingerichtet ist, an der optisch relevanten Baueinheit, welche in dem gezeigten Beispiel als Tragerahmen ausgebildet ist, welcher ein Lichtmodul tragen kann, mittels einem Kopplungselement **360** anzugreifen. Das Kopplungselement **360** ist hierbei durch einen konzentrisch zur Verschubachse **X** angeordneten Kugelkopf gebildet und ist mit dem Tragerahmen gelenkig verbindbar bzw. verbunden.

Grundsätzlich kann es sich bei der optisch relevanten Baueinheit aber um ein Einzelteil eines Kraftfahrzeugscheinwerfers oder einer Leuchteinheit, etwa um einen Reflektor, eine Linse, eine Lichtquelle, eine Blendenanordnung etc. handeln, oder die optisch relevante Baueinheit umfasst ein oder mehrere solcher Bauteile oder ein oder mehrere Leuchteinheiten auf einem gemeinsamen Träger, der verschwenkbar ist.

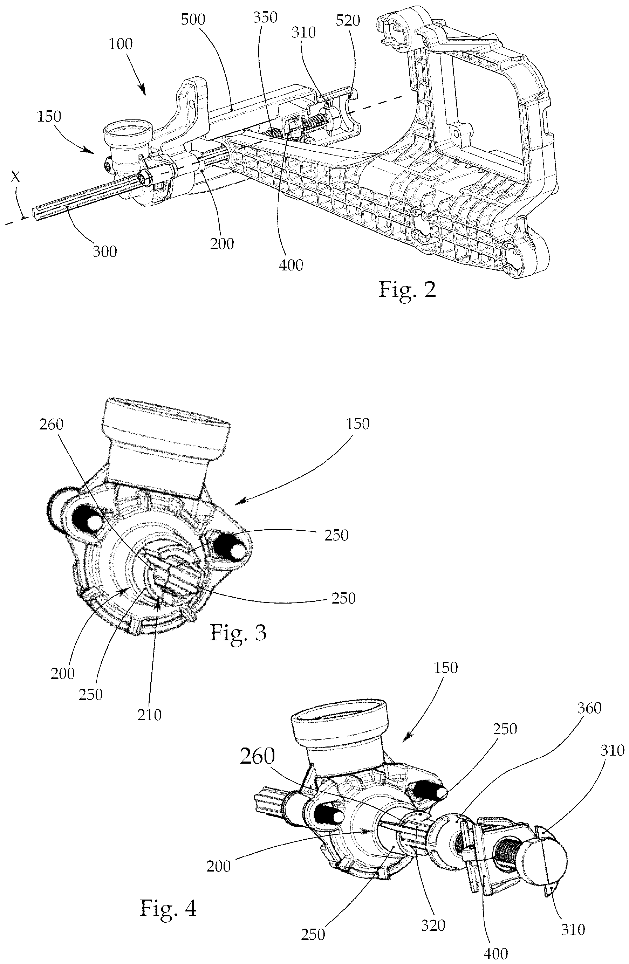

Ferner umfasst die Einstellvorrichtung **100** ein in dem Halterungskörper **500** anordenbares Führungsteil **400** mit einem den Gewindeabschnitt **350** korrespondierenden Gegengewinde **410**, wobei das Stellelement **300** mittels des auf den Gewindeabschnitt **350** anbringbaren Führungsteils **400**, welches in Kombination mit dem Gewindeabschnitt **350** dazu eingerichtet ist, eine Drehbewegung des Übertragungselements **200** in eine Schiebebewegung entlang der Verschubachse **X** zu wandeln, in dem Führungsteil **400** dreh- und verschiebbar gelagert ist, wobei das Kopplungselement **360** des Stellelements **300** zwischen dem Gewindeabschnitt **350** und dem Verbindungsabschnitt **340** angeordnet ist. Das Führungsteil **400** ist in Bezug auf die Antriebsvorrichtung **150** feststehend in dem Halterungskörper **500** angeordnet und ist zudem in dem gezeigten Beispiel lösbar in dem Halterungskörper **500** angeordnet, was im zusammengebauten Zustand der Einstellvorrichtung **100** in **Fig. 2** deutlicher zu sehen ist.

**Fig. 2** zeigt hierzu die beispielhafte Einstellvorrichtung **100** in einem zusammengebauten Zustand, wobei das optisch relevante Bauteil - hier der dargestellte Tragerahmen - mit dem Kopplungselement **360** des Stellelements **300** in mechanischem Eingriff steht.

Das Stellelement **300** umfasst in dem gezeigten Beispiel in **Fig. 1** und **2** zwei radial zur Verschubachse **X** vorragende Vorsprünge **310** und der Halterungskörper **500** einen ersten und einen zweiten dazu korrespondierenden Anschlag **510**, **520**, wobei die Vorsprünge **310** sowie der erste und zweite Anschlag **510**, **520** dazu eingerichtet sind, den Hub des Stellelements **300** entlang der Verschubachse **X** zu begrenzen.

Ferner ist das Stellelement **300** zumindest teilweise in einer im Wesentlichen kreisförmigen, konzentrisch zur Verschubachse angeordneten Öffnung **210** des Übertragungselements **200** aufgenommen ist, wobei das Übertragungselement **200** als Überdrehschutz elastische Zungen **250** aufweist, die am Umfang der im Wesentlichen kreisförmigen Öffnung **210** angeordnet sind und sich entlang der Verschubachse **X** erstrecken, wobei die elastischen Zungen **250** Vorsprünge **260** aufweisen, die dazu eingerichtet sind, in auf dem Stellelement angeordnete, korrespondierende Vertiefungen **320** einzugreifen, was in **Fig. 3** und **4** zu sehen ist. Ist beispielsweise der Maximalhub des Stellelements **300** in Bezug auf das Übertragungselement **200** erreicht, so kann eine mechanische Überlastung ihrer Verbindung verhindert werden, indem sich ab einem definierten Drehmoment die elastischen Zungen **250** derart verformen, dass die Vorsprünge **260** aus den korrespondierenden Vertiefungen **320** gleiten und ein "Durchdrehen" des Übertragungselements **200** in Bezug auf das Stellelement **300** ermöglichen.

Die Vorsprünge **260** sind dabei in Form von achsenparallelen Zapfen und die dazu korrespondierenden Vertiefungen **320** als achsenparallele Rillen ausgeführt.

Es kann überdies vorgesehen sein, dass der Halterungskörper **500** mit einem Scheinwerfergehäuse des Kraftfahrzeugscheinwerfers fest verbunden und beispielsweise mittels Schrauben angeschraubt ist. Es kann auch vorgesehen sein, dass der Halterungskörper mit dem Scheinwerfergehäuse gemeinsam als ein Stück mittels einem Spritzgussverfahren hergestellt ist.

## Patentansprüche

1. Einstellvorrichtung (100) zur Einstellung einer optisch relevanten Baueinheit eines Kraftfahrzeugscheinwerfers, welche Einstellvorrichtung Folgendes umfasst:
- eine Antriebsvorrichtung (150), welche an einem Halterungskörper (500) angeordnet ist, und ein um eine Verschubachse (X) drehbar gelagertes Übertragungselement (200) umfasst,
- ein Stellelement (300), aufweisend einen Verbindungsabschnitt (340) und einem Gewindeabschnitt (350), wobei der Verbindungsabschnitt (340) des Stellelements (300) mit dem Übertragungselement (200) mittels einer Verbindung in mechanischem Eingriff steht, wobei das Stellelement (300) dazu eingerichtet ist, an der optisch relevanten Baueinheit mittels einem Kopplungselement (360) anzugreifen, und
- ein in dem Halterungskörper (500) angeordnetes Führungsteil (400) mit einem den Gewindeabschnitt (350) korrespondierenden Gegengewinde (410), wobei das Stellelement (300) mittels des auf den Gewindeabschnitt (350) anbringbaren Führungsteils (400), welches in Kombination mit dem Gewindeabschnitt (350) dazu eingerichtet ist, eine Drehbewegung des Übertragungselements (200) in eine Schiebebewegung entlang der Verschubachse (X) zu wandeln, in dem Führungsteil (400) dreh- und verschiebbar gelagert ist,
**dadurch gekennzeichnet, dass**
das Kopplungselement (360) des Stellelements (300) zwischen dem Gewindeabschnitt (350) und dem Verbindungsabschnitt (340) angeordnet ist.

2. Einstellvorrichtung nach Anspruch 1, **dadurch gekennzeichnet, dass** das Stellelement (300) zumindest einen radial zur Verschubachse (X) vorragenden Vorsprung (310) und der Halterungskörper (500) einen ersten und einen zweiten dazu korrespondierenden Anschlag (510, 520) aufweist, wobei der Vorsprung (310) sowie der erste und zweite Anschlag (510, 520) dazu eingerichtet sind, den Hub des Stellelements (300) entlang der Verschubachse (X) zu begrenzen.

3. Einstellvorrichtung nach Anspruch 1 oder 2, **dadurch gekennzeichnet, dass** das Stellelement (300) zumindest teilweise in einer im Wesentlichen kreisförmigen, konzentrisch zur Verschubachse angeordneten Öffnung (210) des Übertragungselements (200) aufgenommen ist, wobei das Übertragungselement (200) als Überdrehschutz elastische Zungen (250) aufweist, die am Umfang der im Wesentlichen kreisförmigen Öffnung (210) angeordnet sind und sich entlang der Verschubachse (X) erstrecken, wobei die elastischen Zungen (250) Vorsprünge (260) aufweisen, die dazu eingerichtet sind, in auf dem Stellelement angeordnete, korrespondierende Vertiefungen (320) einzugreifen.

4. Einstellvorrichtung nach Anspruch 3, **dadurch gekennzeichnet, dass** die Vorsprünge (260) in Form von achsenparallelen Zapfen und die dazu korrespondierenden Vertiefungen (320) als achsenparallele Rillen ausgeführt sind.

5. Einstellvorrichtung nach Anspruch 1 bis 4, **dadurch gekennzeichnet, dass** das Führungsteil (400) lösbar in dem Halterungskörper (500) angeordnet ist.

6. Einstellvorrichtung nach einem der Ansprüche 1 bis 5, **dadurch gekennzeichnet, dass** die Antriebsvorrichtung (150) als mechanischer Motor, vorzugsweise mit einem Winkelgetriebe, ausgebildet ist.

7. Einstellvorrichtung nach einem der Ansprüche 1 bis 5, **dadurch gekennzeichnet, dass** die Antriebsvorrichtung (150) als Elektromotor ausgebildet ist.

8. Einstellvorrichtung nach einem der Ansprüche 1 bis 7, **dadurch gekennzeichnet, dass** das Kopplungselement (360) durch einen konzentrisch zur Verschubachse (X) angeordneten Kugelkopf gebildet ist.

9. Kraftfahrzeugscheinwerfer mit einem Gehäuse und zumindest einer optisch relevanten Baueinheit sowie mit zumindest einer Einstellvorrichtung (100) gemäß einem der Ansprüche 1 bis 8.

10. Kraftfahrzeugscheinwerfer nach Anspruch 9, **dadurch gekennzeichnet, dass** das Führungsteil (400) in Bezug auf das Gehäuse des Kraftfahrzeugscheinwerfers feststehend angeordnet ist.

11. Kraftfahrzeugscheinwerfer nach Anspruch 9 oder 10, **dadurch gekennzeichnet, dass** der Halterungskörper (500) mit dem Gehäuse des Kraftfahrzeugscheinwerfers fest verbunden ist.
